# EUROPEAN PATENT APPLICATION

(11) **EP 2 908 031 A1**
(43) Date of publication of application: **19.08.2015**
(21) Application number: 13842557.4
(22) Date of filing: 24.09.2013
(51) Int. Cl.: F16H 61/02, F16H 63/30

(54) **AUTOMATIC TRANSMISSION AND CONTROL METHOD THEREFOR**

(30) Priority: 26.09.2012 JP 2012212546
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP)
(74) Representative: Hoefer & Partner Patentanwälte mbB
(86) International application number: PCT/JP2013/075668
(87) International publication number: WO 2014/050799

(57) **Abstract**

A control unit performs a fastening control, which supplies an ON pressure to a fastening-side oil chamber to set a lock mechanism to a locked state and then decreases a hydraulic pressure of the fastening-side oil chamber, when a running mode is selected, and performs a releasing control, which supplies an OFF pressure to a release-side oil chamber to set the lock mechanism to an unlocked state and then decreases a hydraulic pressure of the release-side oil chamber, when a non-running mode is selected. The control unit supplies the OFF pressure to the release-side oil chamber when a stop of operation of the driving force source is notified, and allows stopping the operation of the driving force source when the lock mechanism becomes the unlocked state afterward.

## Description

### TECHNICAL FIELD

The present invention relates to a control for an automatic transmission that comprises a friction element with a lock mechanism.

### BACKGROUND ART

As a clutch brake of an automatic transmission, a friction element operating with hydraulic pressure is used to couple two members (in the case of a clutch, both are rotational elements, and in the case of a brake, one is a rotational element and the other is a non-rotational element) coaxially arranged.

For this friction element, in JP07-12221A, a plurality of friction plates are mounted on the respective two members to be axially slidable, and the friction plates for the two members are alternately arranged. When the friction plates for the two members are pressed against each other by a hydraulic piston, the two members are coupled to each other via the friction plates.

### SUMMARY OF INVENTION

In the friction element described in JP07-12221A, to maintain the fastened state, it is necessary to cause the fastening hydraulic pressure exceeding the biasing force of a return spring to constantly act on the hydraulic piston. Accordingly, there is a problem that consumes a lot of energy to fasten the friction element using a hydraulic pump or similar member so as to reduce the energy efficiency of the vehicle where the automatic transmission is mounted.

In this friction element, in the case where the input rotation speed significantly increases, for example, the engine is revved up when idling in the non-fastened state, the influence of the centrifugal force due to the input rotation speed might increase the hydraulic pressure existing in a hydraulic piston chamber and move the hydraulic piston so as to cause the fastened state of the friction element. When the biasing force of the return spring is increased to prevent this situation, there is a problem that deteriorates the energy efficiency due to an increase in fastening hydraulic pressure, or an increase in size and an increase in weight of the friction element.

The present invention has been made in view of the above-described problems, and it is an object of the present invention to provide an automatic transmission that maintains the fastened state of the friction element without causing constant action of the hydraulic pressure so as to improve the energy efficiency.

According to one aspect of the present invention, an automatic transmission for shifting and outputting rotation of a driving force source comprises a friction element, a rotation-speed detecting unit, a select switch, and a control unit. The friction element is arranged in a power transmission path. The friction element becomes a fastened state by supply of an ON pressure to a fastening-side oil chamber while a lock mechanism becomes a locked state. The friction element maintains the fastened state when the lock mechanism becomes the locked state if a hydraulic pressure of the fastening-side oil chamber decreases. The friction element becomes a released state by supply of an OFF pressure to a release-side oil chamber when the lock mechanism is in the locked state while the lock mechanism becomes an unlocked state. The friction element maintains the released state when the lock mechanism becomes the unlocked state if a hydraulic pressure of the release-side oil chamber decreases. The rotation-speed detecting unit is configured to detect a rotation speed of the driving force source. The select switch allows selecting a running mode or a non-running mode as a transmission mode. The control unit configured to: perform a fastening control when the running mode is selected by the select switch; and perform a releasing control when the non-running mode is selected by the select switch. The fastening control supplies the ON pressure to the fastening-side oil chamber so as to set the lock mechanism to the locked state and then decreases the hydraulic pressure of the fastening-side oil chamber. The releasing control supplies the OFF pressure to the release-side oil chamber so as to set the lock mechanism to the unlocked state and then decreases the hydraulic pressure of the release-side oil chamber. In a case where the non-running mode is selected and the lock mechanism is in the unlocked state, when a rotation speed detected by the rotation-speed detecting unit exceeds a first predetermined rotation speed, this control unit starts supplying a hydraulic pressure to the release-side oil chamber.

According to another aspect of the present invention, a control method is for an automatic transmission that shifts and outputs rotation of a driving force source. The automatic transmission includes a friction element, a select switch, and a rotation-speed detecting unit. The friction element is arranged in a power transmission path. The friction element becomes a fastened state by supply of an ON pressure to a fastening-side oil chamber while a lock mechanism becomes a locked state. The friction element maintains the fastened state when the lock mechanism becomes the locked state if a hydraulic pressure of the fastening-side oil chamber decreases. The friction element becomes a released state by supply of an OFF pressure to a release-side oil chamber when the lock mechanism is in the locked state while the lock mechanism becomes an unlocked state. The friction element maintains the released state when the lock mechanism becomes the unlocked state if a hydraulic pressure of the release-side oil chamber decreases. The select switch allows selecting a running mode or a non-running mode as a transmission mode. The rotation-speed detecting unit is configured to detect a rotation speed of the driving force source. The control method comprises: performing a fastening control when the running mode is selected by the select switch; and performing a releasing control when the non-running mode is selected by the select switch. The fastening control supplies the ON pressure to the fastening-side oil chamber so as to set the lock mechanism to the locked state and then decreases the hydraulic pressure of the fastening-side oil chamber. The releasing control supplies the OFF pressure to the release-side oil chamber so as to set the lock mechanism to the unlocked state and then decreases the hydraulic pressure of the release-side oil chamber. In a case where the non-running mode is selected and the lock mechanism is in the unlocked state, when a rotation speed of the driving force source exceeds a first predetermined rotation speed, the control method starts supplying a hydraulic pressure to the release-side oil chamber.

According to the aspect described above, the lock mechanism BL is set to the locked state in the fastened state by supply of the ON pressure and the locked state is maintained after removal of the ON pressure. The lock mechanism BL is set to the unlocked state by supply of the OFF pressure. Accordingly, the non-fastened state can be maintained without requiring a return spring or similar member. In the case where the rotation speed significantly increases in the non-running range, as it is called, in the case where the engine is revved up when idling, the start of supplying the hydraulic pressure to the release-side oil chamber allows a control such that the friction element does not have the torque transmission capacity. This reduces the load on the return spring compared with the conventional technology so as to reduce the size and the weight of the return spring or eliminate the need for the return spring, thus improving the energy efficiency.

### BRIEF DESCRIPTION OF DRAWINGS

FIG. 1 is a schematic configuration diagram of a vehicle that comprises an automatic transmission according to an embodiment of the present invention.
FIG. 2 is a cross-sectional view of a forward clutch according to the embodiment of the present invention and a clutch operation pack that causes this forward clutch to operate.
FIG. 3 is a flowchart of the control executed by a transmission controller according to the embodiment of the present invention.

### DESCRIPTION OF EMBODIMENTS

The following describes an embodiment of the present invention by referring to the attached drawings.

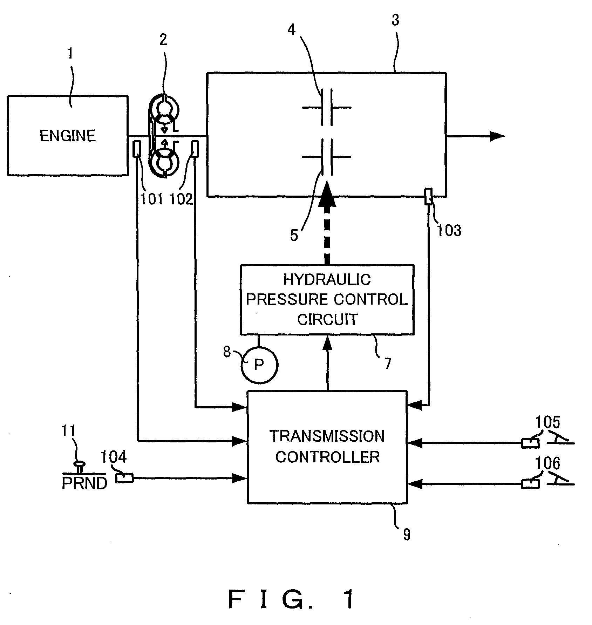

FIG. 1 illustrates the schematic configuration of a vehicle that comprises an automatic transmission according to the embodiment of the present invention. The vehicle comprises an engine 1, a torque converter 2, and a transmission 3. The output rotation of the engine 1 is transmitted to a drive wheel, which is not illustrated, via the torque converter 2, the transmission 3, and a differential gear unit, which is not illustrated.

The transmission 3 is a stepped or stepless automatic transmission. The transmission 3 comprises a reverse brake 4 and a forward clutch 5. The transmission 3 outputs reversed rotation of the engine 1 in a state where the reverse brake 4 is fastened, and outputs the rotation of the engine 1 while maintaining the rotation direction in a state where the forward clutch 5 is fastened.

The reverse brake 4 is a conventional friction element that is fastened by supply of a fastening pressure and requires a continuous supply of the fastening pressure to maintain the fastened state. It is only necessary to stop the supply of the fastening pressure to release the reverse brake 4.

The forward clutch 5 is a friction element that comprises a lock mechanism BL as described below. When the ON pressure is supplied to the forward clutch 5 and then the lock mechanism BL becomes the locked state, the forward clutch 5 can be maintained in the fastened state even if the supply of the ON pressure is stopped. To release the forward clutch 5, it is only necessary to supply the OFF pressure to the forward clutch 5 to cause the released state of the lock mechanism BL. Once the lock mechanism BL becomes the released state, the forward clutch 5 can be maintained in the released state even if the supply of the OFF pressure is stopped. The configuration of the forward clutch 5 will be described in detail later.

When both the reverse brake 4 and the forward clutch 5 are simultaneously fastened, the transmission 3 becomes what is called an interlock state where the output shaft cannot rotate. Accordingly, these are selectively fastened.

A hydraulic pressure control circuit 7 comprises: a regulator valve, which regulates the hydraulic pressure from a hydraulic pump 8 driven by the engine 1 to the line pressure; a solenoid valve, which regulates the hydraulic pressure supplied to the friction elements (and the configuration member of the continuously variable transmission mechanism in the case where the transmission 3 is a continuously variable transmission) including the forward clutch 5 assuming that the line pressure is the source pressure; the hydraulic pump 8; and an oil passage, which couples between the respective valves and the respective friction elements.

The respective valves of the hydraulic pressure control circuit 7 are controlled based on the control signal from a transmission controller 9. The transmission controller 9 is constituted of a CPU, a ROM, a RAM, input/output interfaces, and similar member. The transmission controller 9 determines the running state of the vehicle based on various signals input from various sensors and the engine controller, and outputs a command to the hydraulic pressure control circuit 7 to realize the transmission gear (the gear ratio in the case where the transmission 3 is a continuously variable transmission) appropriate for the running state.

The transmission controller 9 receives inputs of the signals or similar input from: a rotational speed sensor 101, which detects a rotation speed Ne of the engine 1; a rotational speed sensor 102, which detects a turbine rotation speed Nt (the input rotation speed of the transmission 3) of the torque converter 2; an oil temperature sensor 103, which detects an oil temperature TMP of the transmission 3; an inhibitor switch 104, which detects the position of a select lever 11; an accelerator position sensor 105, which detects the manipulated variable (hereinafter referred to as "accelerator position APO") of the accelerator pedal; a brake switch 106 that detects ON/OF F of the brake; and similar member.

The select lever 11 is arranged at gates, which couple between a parking range (hereinafter referred to as "P range"), a reverse range (hereinafter referred to as "R range"), a neutral range (hereinafter referred to as "N range"), and a drive range (hereinafter referred to as "D range"). The select lever 11 is constituted to be movable between respective gates.

The transmission controller 9 fastens or releases each of the forward clutch 5 and the reverse brake 4 corresponding to the position of the select lever 11. Specifically, in the D range, the forward clutch 5 is fastened and the reverse brake 4 is released. In the R range, the forward clutch 5 is released and the reverse brake 4 is fastened. In the P range and the N range, the forward clutch 5 and the reverse brake 4 are released.

Next, a description will be given of the detailed configuration of the forward clutch 5.

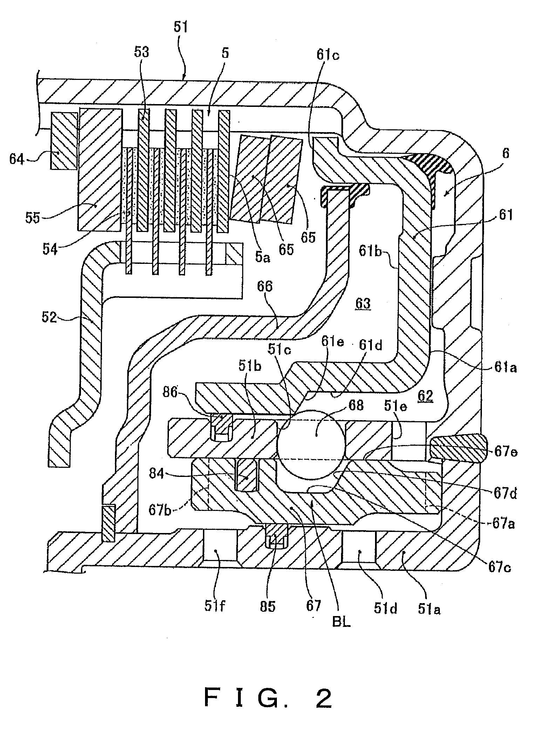

FIG. 2 illustrates cross sections of the forward clutch 5 according to the embodiment of the present invention and a clutch operation pack 6, which causes this forward clutch 5 to operate. The following describes the respective configurations.

The forward clutch 5 comprises a clutch drum 51, a clutch hub 52, a driven plate 53, a drive plate 54, and a retainer plate 55.

The clutch drum 51 and the clutch hub 52 are coaxially arranged. The clutch drum 51 couples to a rotational element (a shaft, a gear, or similar element), which is not illustrated. The clutch hub 52 couples to another rotational element (a shaft, a gear, or similar element), which is not illustrated.

The driven plate 53 is mounted on the clutch drum 51 by spline coupling to be axially slidable. The drive plate 54 is mounted on the clutch hub 52 by spline coupling to be axially slidable. Four driven plates 53 and four drive plates 54 are alternately arranged, and clutch facings are attached to the friction surfaces on both sides of the drive plate 54.

The clutch drum 51 transmits the rotation input from the rotational element coupled to the clutch drum 51 via the driven plate 53 and the drive plate 54 to the clutch hub 52.

The retainer plate 55 intervenes between: the drive plate 54 arranged in the end portion at the opposite side to a hydraulic piston 61; and a snap ring 64 secured to the groove at the inner periphery of the clutch drum 51. The retainer plate 55 has a friction surface on one surface. The retainer plate 55 has a thicker thickness in the axial direction than that of the driven plate 53, and prevents the driven plate 53 and the drive plate 54 from falling over.

The clutch operation pack 6 comprises the hydraulic piston 61, an ON-pressure piston chamber 62, an OFF-pressure piston chamber 63, the snap ring 64, a diaphragm spring 65, a partition plate 66, and the lock mechanism BL.

The hydraulic piston 61 is arranged to be axially movable with respect to the forward clutch 5. The hydraulic piston 61 has an ON-pressure receiving surface 61a on one surface and an OFF-pressure receiving surface 61b on the other surface.

The ON-pressure piston chamber 62 is defined between the clutch drum 51 and the hydraulic piston 61 such that the ON pressure acts on the ON-pressure receiving surface 61a of the hydraulic piston 61.

The OFF-pressure piston chamber 63 is defined between the partition plate 66 secured to the clutch drum 51 and the hydraulic piston 61 such that the OFF pressure acts on the OFF-pressure receiving surface 61b of the hydraulic piston 61.

The snap ring 64 is arranged in the position at the opposite side to the hydraulic piston 61 across the forward clutch 5, and axially supports the forward clutch 5.

The diaphragm spring 65 intervenes between a clutch-side end surface 61c of the hydraulic piston 61 and a piston-side end surface 5a of the forward clutch 5. The diaphragm spring 65 is arranged in pairs stacked in the axis direction, and causes the fastening force to act on the forward clutch 5 when the hydraulic piston 61 is moved in the fastening direction toward the snap ring 64.

The lock mechanism BL is incorporated in the clutch drum 51, and is constituted of the hydraulic piston 61, a ball holding piston 67, and a ball 68.

The hydraulic piston 61 is arranged to be axially movable with respect to the forward clutch 5. At the hydraulic piston 61, a housing space 61d and a tapered surface 61e are disposed. The housing space 61d houses the ball 68 when the movement of the hydraulic piston 61 in the releasing direction is restricted. The tapered surface 61e is formed continuously with the housing space 61d. When the hydraulic piston 61 has a stroke in the releasing direction, the ball 68 is pressed inward.

The ball holding piston 67 is arranged in a cylindrical space defined between: an inner peripheral cylinder portion 51a of the clutch drum 51 covering the hydraulic piston 61; and a partition cylindrical wall portion 51b, which axially projects from the clutch drum 51. When the ON pressure or the OFF pressure acts, the ball holding piston 67 moves in the axial direction. The space between the outer peripheral surface of the ball holding piston 67 and the partition cylindrical wall portion 51 b is sealed by a sealing ring 84. The space between the inner peripheral surface of the ball holding piston 67 and the inner peripheral cylinder portion 51a is sealed by a sealing ring 85. The space between the inner peripheral surface of the hydraulic piston 61 and the partition cylindrical wall portion 51b is sealed by a sealing ring 86. Accordingly, on both sides of this hydraulic piston 61, the ON-pressure piston chamber 62 and the OFF-pressure piston chamber 63 are defined.

An ON-pressure port 51d, which is opened at the clutch drum 51, and the ON-pressure piston chamber 62 communicate with each other via an ON-pressure communication groove 67a, which is formed in the ball holding piston 67, and an ON-pressure communication hole 51e, which is opened at the partition cylindrical wall portion 51b. An OFF-pressure port 51f, which is opened at the clutch drum 51, and the OFF-pressure piston chamber 63 communicate with each other via an OFF-pressure communication groove 67b, which is formed in the ball holding piston 67, and an OFF-pressure communication clearance, which is secured between the end portion of the partition cylindrical wall portion 51b and the partition plate 66.

In the ball holding piston 67, a housing space 67c, a tapered surface 67d, and a lock surface 67e are disposed. The housing space 67c houses the ball 68 when the movement of the hydraulic piston 61 in the releasing direction is allowed. The tapered surface 67d and the lock surface 67e are formed continuously with the housing space 67c. When the ball holding piston 67 has a stroke in the direction toward the forward clutch 5, the tapered surface 67d extrudes the ball 68 outward. The lock surface 67e locks the extruded ball 68 to that position.

The ball 68 is disposed at a ball hole 51c, which is opened in the partition cylindrical wall portion 51b. The ball 68 receives the forces from these tapered surfaces 61e and 67d of the pistons 61 and 67 in association with the movement of the hydraulic piston 61 and the ball holding piston 67 in the axial direction due to the action of the ON pressure or the OFF pressure, so as to move in the radial direction between a lock position and a lock release position.

With the configuration described above, when the ON pressure is caused to act on the ON-pressure piston chamber 62, the hydraulic piston 61 moves in the fastening direction approaching the forward clutch 5. Then, the forward clutch 5 becomes the fastened state due to the fastening force by the diaphragm spring 65. When the hydraulic piston 61 moves in the fastening direction, the centrifugal force due to the rotation and the hydraulic pressure move the ball 68 in the radially outward direction so as to house the ball 68 in the housing space 61d. In association with the action of the ON pressure on the ball holding piston 67, the ball holding piston 67 moves in the axial direction (the direction toward the forward clutch 5). Then, the lock surface 67e holds the ball 68 held in the housing space 67c.

This causes the locked state of the lock mechanism BL so as to restrict the movement of the hydraulic piston 61 in the releasing direction. Accordingly, the fastened state of the forward clutch 5 is maintained even when the ON pressure is drained. The ON pressure is supplied to the ON-pressure piston chamber 62 only during the fastening operation. There is no need to supply the ON pressure for maintaining the fastened state of the forward clutch 5.

When the OFF pressure is caused to act on the OFF-pressure piston chamber 63, the ball holding piston 67 moves in the axial direction (the direction separated from the forward clutch 5) from the holding position of the ball 68 by the lock surface 67e to the holding release position. The force as the sum of the force by the OFF pressure and the reactive force of the fastening force by the diaphragm spring 65 acts on the hydraulic piston 61 to cause a stroke in the direction in which the hydraulic piston 61 returns, and presses the ball 68 back in the lock releasing direction. When the ball 68 moves up to the lock release position, the lock mechanism BL becomes the released state.

When the forward clutch 5 is released, the ON pressure is zero. This maintains the state where the ball 68 is housed in the housing space 67c of the ball holding piston 67 even when the OFF pressure is drained. The OFF pressure is supplied to the OFF-pressure piston chamber 63 only during the releasing operation. There is no need to supply the OFF pressure for maintaining the released state of the forward clutch 5.

According to the vehicle that comprises the automatic transmission thus configured, next, the control of the automatic transmission will be described.

In the embodiment of the present invention, a description will be given of the control in the case where the driver revs up the engine when idling in the non-running mode (the N range or the P range).

In the case where the vehicle is in the non-running mode (the N range or the P range), the lock mechanism BL is set to be in the released state as described above and the forward clutch 5 is maintained in the released state. At this time, assume the case where the driver revs up the engine 1 when idling, for example, the driver deeply depresses the accelerator pedal. When the engine is revved up when idling in the non-running mode, the rotation speed Ne of the engine 1 increases and is inputted to the transmission 3 via the torque converter 2 so as to transmit the rotation to the input side of the forward clutch 5, that is, the clutch drum 51. The rotation of the clutch drum 51 causes the rotation of the clutch operation pack 6.

At this time, in the clutch operation pack 6, the centrifugal force by the rotation causes application of the force outward in the radial direction to the operation oil accumulated in the ON-pressure piston chamber 62 and the OFF-pressure piston chamber 63. This centrifugal force increases the hydraulic pressures of the operation oil in the ON-pressure piston chamber 62 and the OFF-pressure piston chamber 63.

The operation oil is accumulated similarly in both the ON-pressure piston chamber 62 and the OFF-pressure piston chamber 63. Accordingly, in the case where the rotation speed Ne of the engine 1 is not high, the hydraulic pressures at the ON pressure side and the OFF pressure side cancel each other, so as to maintain the state of the hydraulic piston 61 if these hydraulic pressures increase.

However, in the case where the rotation speed Ne significantly increases (for example, at 4500 rpm), the difference in shape between the ON-pressure piston chamber 62 and the OFF-pressure piston chamber 63 causes the biased pressing force to the hydraulic piston 61 due to the increased hydraulic pressure.

Particularly, since the clutch operation pack 6 of this embodiment comprises the lock mechanism BL, the clutch operation pack 6 has small volumes of the ON-pressure piston chamber 62 and the OFF-pressure piston chamber 63 and cannot have a large structure for cancelling the hydraulic pressure. According to the structure of the clutch operation pack 6, the ON-pressure piston chamber 62 is positioned to the outer periphery rather than the OFF-pressure piston chamber 63. Accordingly, the centrifugal force facilitates an increase in hydraulic pressure of the ON-pressure piston chamber 62 rather than the OFF-pressure piston chamber 63. Furthermore, since the forward clutch 5 according to the embodiment of the present invention controls the released state using the hydraulic pressure, the forward clutch 5 does not have a mechanism such as a return spring that biases the hydraulic piston 61 to the release side.

With this structure, in the case where the rotation speed Ne of the engine 1 is significantly increased by revving up the engine 1 when idling in the non-running range, the hydraulic pressure of the ON-pressure piston chamber 62 might increases and the hydraulic piston 61 might move in the fastening direction. Accordingly, providing the torque transmission capacity to the forward clutch 5 might cause a shock in the vehicle and a forward movement of the vehicle. To prevent this situation, it is possible to take countermeasures, for example, increasing the volumes of the ON-pressure piston chamber 62 and the OFF-pressure piston chamber 63, positioning the OFF-pressure piston chamber 63 to the outer periphery rather than the ON-pressure piston chamber 62, and disposing a return spring in the hydraulic piston 61. However, any of the countermeasures cannot avoid increases in size and weight of the forward clutch 5 and the clutch operation pack 6.

Therefore, in the embodiment of the present invention, the following control causes the configuration where the forward clutch 5 does not have the torque transmission capacity even in the case where the engine is revved up when idling in the non-running range.

In the case where the lock mechanism BL is in the released state, the transmission controller 9 does not usually supply the hydraulic pressure to the OFF-pressure piston chamber 63. Here, as described above, in the case where the rotation speed Ne of the engine 1 becomes high, the transmission controller 9 supplies the hydraulic pressure to the OFF-pressure piston chamber 63 so as to prevent the hydraulic piston 61 from moving in the fastening direction. In this case, the hydraulic pressure is not constantly supplied to the OFF-pressure piston chamber 63 but the hydraulic pressure is supplied as necessary in the control.

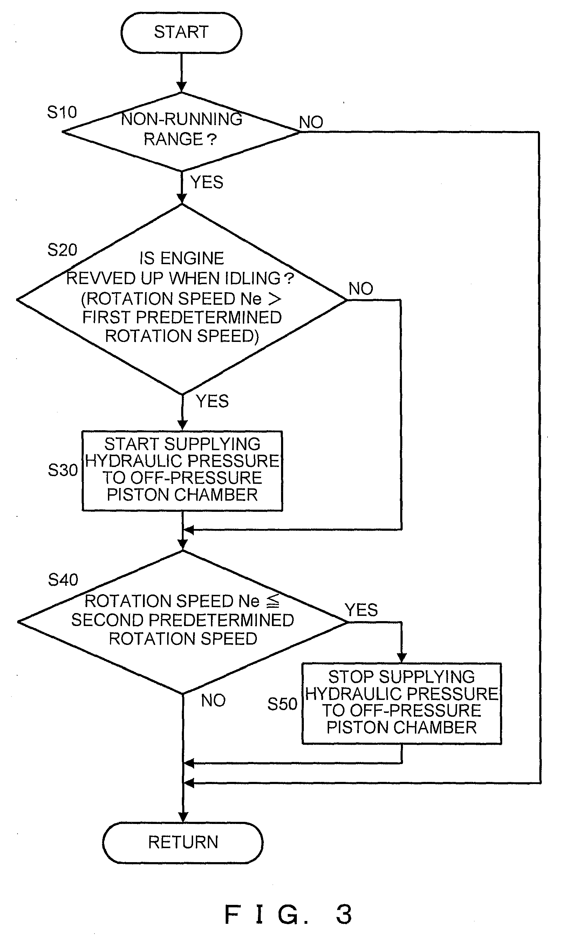

FIG. 3 is a flowchart of the control executed by the transmission controller 9 according to the embodiment of the present invention.

This flowchart illustrated in FIG. 3 is executed in a predetermined cycle (for example, 10 ms) in the transmission controller 9.

In step S10, the transmission controller 9 acquires the signal from the inhibitor switch 104 to determine whether the select lever 11 is in the running range or the non-running range. In the case of the running range, the process according to this flowchart is terminated and the process returns to another process. It should be noted that, for example, the running range corresponds to the D range and the non-running range corresponds to the N range and the P range.

In the case of the non-running range, in step S20, the transmission controller 9 acquires the signal from the rotational speed sensor 101 to acquire the current rotation speed Ne of the engine 1. The transmission controller 9 determines whether or not the rotation speed Ne of the engine 1 exceeds a first predetermined rotation speed in the non-running range, that is, whether or not the engine 1 is revved up when idling.

The first predetermined rotation speed is the rotation speed at which the hydraulic pressure of the ON-pressure piston chamber 62 is increased by the centrifugal force and the hydraulic piston 61 moves to the fastening side such that the torque transmission capacity might begin to be provided, for example, 4500 rpm.

In the case where the rotation speed Ne of the engine 1 is equal to or less than the first predetermined rotation speed, that is, in the case where the engine is not revved up when idling, the process proceeds to step S40 without execution of subsequent step S30.

In the case where it is determined that the rotation speed Ne of the engine 1 exceeds the first predetermined rotation speed in the non-running range, that is, the engine 1 is not revved up when idling, the process proceeds to step S30. Then, the transmission controller 9 starts to supply the hydraulic pressure to the OFF-pressure piston chamber 63. Subsequently, the process proceeds to step S40.

In step S40, the transmission controller 9 acquires the current rotation speed Ne of the engine 1 from the rotational speed sensor 101 to determine whether the rotation speed Ne of the engine 1 is equal to or less than a second predetermined rotation speed. It should be noted that the second predetermined rotation speed is the rotation speed that is set to a value smaller than that of the first predetermined rotation speed and at which the hydraulic piston 61 does not move to the fastening side if the hydraulic pressure of the ON-pressure piston chamber 62 is increased by the centrifugal force such that the torque transmission capacity is not provided, for example, 4000 rpm.

In the case where the rotation speed Ne of the engine 1 is higher than the second predetermined rotation speed, the process according to this flowchart is terminated without execution of step S50 and the process returns to another process.

In the case where it is determined that the rotation speed Ne of the engine 1 is equal to or less than the second predetermined rotation speed, the process proceeds to step S50. The transmission controller 9 stops the supply, which is started in step S30, of the hydraulic pressure to the OFF-pressure piston chamber 63. That is, in the case where the rotation speed Ne of the engine 1 is equal to or less than the second predetermined rotation speed, the forward clutch 5 does not have the torque transmission capacity. Accordingly, it is not necessary to supply the hydraulic pressure at the OFF side.

This reduces the load on the hydraulic pump or similar member due to the supply of the hydraulic pressure so as to improve the energy performance. This also prevents the situation where the response to the hydraulic pressure of the ON pressure is delayed by the pressure at the OFF side so as to increase the time required for fastening the forward clutch 5 and the required hydraulic pressure when the non-running range is switched to the running range afterward.

After the process in step S50, the process according to this flowchart is terminated and another process in the transmission controller 9 is executed.

The control as described above allows the control such that the forward clutch 5 does not have the torque transmission capacity also in the case where the engine is revved up when idling in the non-running range, so as to prevent a shock in the vehicle or a forward movement of the vehicle.

It should be noted that the hydraulic pressure supplied to the OFF-pressure piston chamber 63 in step S20 described above may be set to, for example, the maximum hydraulic pressure supplied to the OFF-pressure piston chamber 63.

Alternatively, the transmission controller 9 may control the hydraulic pressure control circuit 7 such that the hydraulic pressure increases as the rotation speed Ne of the engine 1 increases. As the rotation speed Ne of the engine 1 increases, the forward clutch 5 is likely to have the torque transmission capacity. Accordingly, this situation is prevented. On the other hand, supplying the minimum necessary hydraulic pressure prevents the situation where the response to the hydraulic pressure of the ON pressure is delayed by the pressure at the OFF side so as to increase the time required for fastening the forward clutch 5 and the required hydraulic pressure when the non-running range is switched to the running range. Accordingly, the reduction in energy efficiency due to the load on the hydraulic pump can be restricted to the minimum limit.

In the embodiment of the present invention configured as described above, the transmission 3 comprises the forward clutch 5. The forward clutch 5 becomes the fastened state and sets the locked state of the lock mechanism BL by supply of the ON pressure. The forward clutch 5 maintains the locked state after removal of the ON pressure. The forward clutch 5 becomes the released state and sets the unlocked state of the lock mechanism BL by supply of the OFF pressure. The forward clutch 5 maintains the unlocked state after removal the OFF pressure. In the non-running mode, that is, when the lock mechanism BL is in the released state and when the rotation speed Ne of the engine 1 exceeds the first predetermined rotation speed, the supply of the hydraulic pressure to the OFF-pressure piston chamber 63 is started.

With this configuration, in the case where the forward clutch 5 is maintained in the fastened state, the lock mechanism BL can be set to the locked state by supply of the ON pressure and it is not necessary to continuously supply the hydraulic pressure. This reduces the load on the hydraulic pump to supply the hydraulic pressure so as to improve the energy efficiency. Furthermore, in the case where the engine is revved up when idling in the non-running range, supplying the hydraulic pressure to bias the hydraulic piston 61 to the release side eliminates the need for the biasing force by a return spring or similar member. This allows the control such that the forward clutch 5 does not have the torque transmission capacity, thus preventing a shock caused in the vehicle and a forward movement of the vehicle.

As described above, after the supply of the hydraulic pressure to the OFF-pressure piston chamber 63 is started, when the rotation speed Ne of the engine 1 is equal to or less than the second predetermined rotation speed lower than the first predetermined rotation speed, the supply of the hydraulic pressure to the OFF-pressure piston chamber 63 is stopped.

With this configuration, in the case where the rotation speed Ne of the engine 1 is reduced to the extent that the forward clutch 5 does not have the torque transmission capacity, the supply of the hydraulic pressure is stopped. This prevents the situation where the response to the hydraulic pressure of the ON pressure is delayed by the pressure at the OFF side so as to increase the time required for fastening the forward clutch 5 and the required hydraulic pressure when the non-running range is switched to the running range. The reduction in energy efficiency due to the load on the hydraulic pump can be restricted to the minimum limit.

The embodiments of the present invention described above are merely one illustration of some application examples of the present invention and not of the nature to limit the technical scope of the present invention to the specific constructions of the above embodiments.

While in the embodiment of the present invention, the description is given of the example that comprises the engine 1 that is an internal combustion engine as the driving force source, this should not be construed in a limiting sense. The present invention is similarly applicable to an Electric Vehicle (EV) where an electric motor is used as a driving force source or a hybrid vehicle that comprises an engine and an electric motor as driving force sources.

In the embodiment of the present invention the description is given of the control in the case where the engine 1 is revved up when idling in the non-running range. Here, also in the case where the engine 1 is restarted after a lapse of long time since the engine 1 is stopped, it is possible to perform control to supply the hydraulic pressure to the OFF-pressure piston chamber 63.

After a lapse of long time since the engine 1 is stopped, the hydraulic pressure inside the clutch operation pack 6 is in the drained state and the oil quantity is reduced. According to the structure of the clutch operation pack 6, this structure is likely to cause a loss of the oil quantity in the ON-pressure piston chamber 62 compared with the OFF-pressure piston chamber 63. Here, when the engine 1 is restarted and the rotation is input to the forward clutch 5, according to the structure where the oil quantity is not sufficient and the load is reduced compared with the conventional return spring, the centrifugal force of the rotation might cause the hydraulic pressure of the ON-pressure piston chamber 62 to exceed the hydraulic pressure of the OFF-pressure piston chamber 63 so as to move the hydraulic piston 61 in the fastening direction. Therefore, to prevent this situation, also in the case where the engine 1 is restarted after a lapse of long time since the engine 1 is stopped, the control can be performed to supply the hydraulic pressure to the OFF-pressure piston chamber 63 so as to prevent the situation where the forward clutch 5 has the torque transmission capacity when the engine 1 is restarted.

The present application claims a priority based on Japanese Patent Application No. 2012-212546 filed with the Japan Patent Office on September 26, 2012, all the contents of which are hereby incorporated by reference.

## Claims

1. An automatic transmission for shifting and outputting rotation of a driving force source, the automatic transmission comprising:
a friction element arranged in a power transmission path, the friction element becoming a fastened state by supply of an ON pressure to a fastening-side oil chamber while a lock mechanism becomes a locked state, the friction element maintaining the fastened state when the lock mechanism becomes the locked state if a hydraulic pressure of the fastening-side oil chamber decreases, the friction element becoming a released state by supply of an OFF pressure to a release-side oil chamber when the lock mechanism is in the locked state while the lock mechanism becomes an unlocked state, the friction element maintaining the released state when the lock mechanism becomes the unlocked state if a hydraulic pressure of the release-side oil chamber decreases;
a select switch that allows selecting a running mode or a non-running mode as a transmission mode;
a rotation-speed detecting unit configured to detect a rotation speed of the driving force source; and
a control unit configured to:
perform a fastening control when the running mode is selected by the select switch, the fastening control supplying the ON pressure to the fastening-side oil chamber so as to set the lock mechanism to the locked state and then decreasing the hydraulic pressure of the fastening-side oil chamber; and
perform a releasing control when the non-running mode is selected by the select switch, the releasing control supplying the OFF pressure to the release-side oil chamber so as to set the lock mechanism to the unlocked state and then decreasing the hydraulic pressure of the release-side oil chamber, wherein
in a case where the non-running mode is selected and the lock mechanism is in the unlocked state, when a rotation speed detected by the rotation-speed detecting unit exceeds a first predetermined rotation speed, the control unit starts supplying a hydraulic pressure to the release-side oil chamber.

2. The automatic transmission according to claim 1, wherein
when a rotation speed detected by the rotation-speed detecting unit becomes equal to or less than a second predetermined rotation speed lower than the first predetermined rotation speed, the control unit stops supplying the hydraulic pressure to the release-side oil chamber.

3. A control method for an automatic transmission that shifts and outputs rotation of a driving force source, wherein
the automatic transmission includes:
a friction element arranged in a power transmission path, the friction element becoming a fastened state by supply of an ON pressure to a fastening-side oil chamber while a lock mechanism becomes a locked state, the friction element maintaining the fastened state when the lock mechanism becomes the locked state if a hydraulic pressure of the fastening-side oil chamber decreases, the friction element becoming a released state by supply of an OFF pressure to a release-side oil chamber when the lock mechanism is in the locked state while the lock mechanism becomes an unlocked state, the friction element maintaining the released state when the lock mechanism becomes the unlocked state if a hydraulic pressure of the release-side oil chamber decreases;
a select switch that allows selecting a running mode or a non-running mode as a transmission mode; and
a rotation-speed detecting unit configured to detect a rotation speed of the driving force source, wherein
the control method comprising:
performing a fastening control when the running mode is selected by the select switch, the fastening control supplying the ON pressure to the fastening-side oil chamber so as to set the lock mechanism to the locked state and then decreasing the hydraulic pressure of the fastening-side oil chamber; and
performing a releasing control when the non-running mode is selected by the select switch, the releasing control supplying the OFF pressure to the release-side oil chamber so as to set the lock mechanism to the unlocked state and then decreasing the hydraulic pressure of the release-side oil chamber, wherein
in a case where the non-running mode is selected and the lock mechanism is in the unlocked state, when a rotation speed of the driving force source exceeds a first predetermined rotation speed, the control method starts supplying a hydraulic pressure to the release-side oil chamber.
